# EUROPÄISCHE PATENTANMELDUNG

(11) **EP 3 144 752 A1**
(43) Veröffentlichungstag der Anmeldung: **22.03.2017**
(21) Anmeldenummer: 15185926.1
(22) Anmeldetag: 18.09.2015
(51) Int. Cl.: G05B 19/042

(54) **VERFAHREN ZUM BETRIEB EINER INDUSTRIELLEN STEUERUNG SOWIE INDUSTRIELLE STEUERUNG ZUR GEZIELTEN STIMULATION VON STEUERUNGSKOMPONENTEN ZUR FEHLERANALYSE**

(71) Anmelder: Siemens Aktiengesellschaft, 80333 München (DE)
(72) Erfinder: Amthor, Karl-Josef, 82229 Seefeld (DE); Hochmuth, Jens, 09114 Chemnitz (DE)

(57) **Zusammenfassung**

Es sollen ein Verfahren zum Betrieb einer industriellen Steuerung (1) sowie eine industrielle Steuerung (1) zur Steuerung eines industriellen Prozesses, einer Anlage oder der Maschine (2) in Echtzeit angegeben werden, bei denen ein auftretender Fehler leichter analysiert werden kann. Die Steuerung umfasst dabei mehrere Komponenten (5, 6, 7), die über Datenbusse miteinander in Verbindung stehen. Es wird vorgeschlagen, dass die über wenigsten einen Datenbus übertragenen Daten erfasst und zwischengespeichert werden, wobei die in Echtzeit erfolgte Steuerung des industriellen Prozesses, der Anlage oder der Maschine (2) angehalten wird und die zwischengespeicherten Daten zu einem späteren Zeitpunkt in einer Replay-Funktion erneut über den Datenbus übertragen werden. Dadurch kann das Verhalten einer bestimmten Komponente (6) auch im Zusammenspiel mit weiteren Komponenten (5, 7), vorzugsweise mit allen Komponenten der Steuerung (1) analysiert werden.

## Beschreibung

Die vorliegende Erfindung betrifft ein Verfahren zum Betrieb einer industriellen Steuerung, die zur Steuerung eines industriellen Prozesses, einer Anlage oder Maschine in Echtzeit ausgebildet ist. Sie betrifft ferner eine industrielle Steuerung zur Ausführung eines derartigen Verfahrens.

Werkzeugmaschinen sind allgemein bekannt. Sie werden von numerischen Steuerungen gesteuert. Die numerischen Steuerungen arbeiten ein Anwenderprogramm (Steuerprogramm) ab, das aus Anweisungsschritten besteht, z.B. ein Teileprogramm gemäß DIN 66025 oder DIN 66025+. Das Anwenderprogramm legt dabei z.B. fest, welche Maschinenabläufe, z.B. welche Verfahrbewegungen, vorgenommen werden sollen.

Neben numerischen Steuerungen für Werkzeugmaschinen gibt es eine Reihe weiterer industrieller Steuerungen, allgemein zur Steuerung industrieller Prozesse, Anlagen oder Maschinen. Darunter fallen zum Beispiel speicherprogrammierbare Steuerungen (SPS bzw. PLC) oder Steuerungen für Produktionsmaschinen, Roboter etc.

Industrielle Steuerungen weisen häufig als Betriebssystem ein Echtzeitbetriebssystem auf. Sie weisen ferner eine Steuerungssoftware auf. Die Steuerungssoftware bewirkt die Umsetzung der Anweisungsschritte des Anwenderprogramms (Steuerprogramms) in Steuerbefehle. Das Echtzeitbetriebssystem sorgt dafür, dass diese Umsetzung in Echtzeit erfolgt.

Industrielle Steuerungen für komplexe Steuerungsaufgaben umfassen in der Regel mehrere Komponenten, die über Datenbusse miteinander verbunden sind und über die zur Ausführung der jeweiligen Steuerfunktion Daten übertragen werden.

Beispielsweise umfasst eine numerische Steuerung (CNC - Computerized Numerical Control) für eine Werkzeugmaschine in der Regel einen NCK (Numerical Control Kernel) wohinter sich das Echtzeitsystem verbirgt, welches für die Steuerung der Relativbewegung zwischen Werkzeug und Werkstück bei der Bearbeitung des Werkstückes sorgt. Daneben umfasst eine CNC-Steuerung immer auch eine PLC (Programmable Logic Control) für eine Vielzahl nebengeordneter Steuerfunktionen bei einer Werkzeugmaschine. Diese überwacht beispielsweise Sicherheitseinrichtungen oder sorgt bei Bedarf für einen Werkzeugwechsel. Als weitere wesentliche Komponente einer CNC-Steuerung ist in der Regel auch ein HMI (Human-Machine-Interface) vorhanden, das einem Bediener von außen Zugriff auf die Steuerung ermöglicht.

Führt eine industrielle Steuerung die beabsichtigte Steuerfunktion nicht korrekt aus, so ist die Fehlersuche häufig schwierig, da typischerweise alle beteiligten Komponenten der Steuerung bei der Analyse im Verbund laufen müssen, damit der Fehler reproduziert werden kann. Soll eine einzelne Komponente gezielt untersucht werden (z .B. mit einem Debugger) verändert sich gleichzeitig das Ablaufverhalten der Umgebung und der Fehler tritt unter Umständen nicht mehr oder in anderer Form auf.

Eine bekannte Einrichtung zur Überwachung eines datenbusvernetzten Fahrzeugdatenbussystems ist in der deutschen Offenlegungsschrift DE 100 29 642 Al beschrieben. An einen gemeinsamen Kommunikationsbus, beispielsweise einen CAN-Bus, sind verschiedene Systemkomponenten angekoppelt. Des Weiteren umfasst die bekannte Einrichtung eine Busbeobachtereinheit, welche ebenfalls an den Kommunikationsbus angekoppelt ist und welche den gesamten Datenverkehr auf dem oder den angekoppelten Datenbussen über einen vorgebbaren Zeitraum hinweg aufzeichnet und aus welcher der aufgezeichnete Datenverkehr wieder auslesbar ist. Bei dem bekannten Überwachungssystem wird somit eine externe Steuereinheit verwendet, um die Daten aus dem gemeinsamen Kommunikationsbusverkehr aufzuzeichnen.

Die Aufgabe der vorliegenden Erfindung besteht darin, ein Verfahren zum Betrieb einer industriellen Steuerung sowie eine industrielle Steuerung anzugeben, bei denen ein auftretender Fehler leichter analysiert werden kann.

Die Aufgabe wird gelöst durch ein Verfahren zum Betrieb einer industriellen Steuerung, die zur Steuerung eines industriellen Prozesses, einer Anlage oder Maschine in Echtzeit ausgebildet ist,
- wobei der Steuerung ein Steuerprogramm zur Steuerung des industriellen Prozesses, der Anlage oder der Maschine vorgegeben wird,
- wobei die Steuerung unter Abarbeitung des Steuerprogramms Steuerbefehle für den Prozess, die Anlage oder Maschine ermittelt,
- wobei die Steuerung Istwerte des Prozesses, der Anlage oder der Maschine empfängt und zur Steuerung berücksichtigt,
- wobei die Steuerung mehrere Komponenten umfasst, zwischen denen Daten über wenigstens einen Datenbus übertragen werden,
- wobei die über den Datenbus übertragenen Daten erfasst und zwischengespeichert werden,
- wobei die in Echtzeit erfolgte Steuerung des industriellen Prozesses, der Anlage oder der Maschine angehalten wird
- und wobei die zu einer bestimmten Komponente übertragenen und zwischengespeicherten Daten zu einem späteren Zeitpunkt der bestimmten Komponente erneut zugeführt werden.

Ferner wird die Aufgabe gelöst durch eine Industrielle Steuerung, die zur Steuerung eines industriellen Prozesses, einer Anlage oder Maschine in Echtzeit ausgebildet ist,
- wobei von der Steuerung ein Steuerprogramm zur Steuerung des industriellen Prozesses, der Anlage oder der Maschine ausführbar ist,
- wobei von der Steuerung unter Abarbeitung des Steuerprogramms Steuerbefehle für den Prozess, die Anlage oder Maschine ermittelbar sind,
- wobei von der Steuerung Istwerte des Prozesses, der Anlage oder der Maschine empfangbar und zur Steuerung berücksichtigbar sind,
- wobei die Steuerung mehrere Komponenten umfasst, zwischen denen Daten über wenigstens einen Datenbus übertragbar sind,
- wobei die über den Datenbus übertragenen Daten mittels einer Datenaufzeichnungs- und Wiedergabeeinrichtung erfassbar und in einem Zwischenspeicher zwischenspeicherbar sind,
- wobei die in Echtzeit erfolgte Steuerung des industriellen Prozesses, der Anlage oder der Maschine unterbrechbar ist
- und wobei die zu einer bestimmten Komponente übertragenen und zwischengespeicherten Daten mittels der Datenaufzeichnungs- und Wiedergabeeinrichtung zu einem späteren Zeitpunkt aus dem Zwischenspeicher auslesbar und der bestimmten Komponente erneut zuführbar sind.

Der Kern der vorliegenden Erfindung besteht also darin, dass die industrielle Steuerung um eine Funktion erweitert wird, durch die gezielt an bestimmten, vorzugsweise allen Kommunikationsverbindungen zwischen den einzelnen Komponenten die Daten mit einem zeitlichen Bezug aufzeichnet werden. Desweiteren wird eine Funktion implementiert, welche die aufgezeichneten Daten als Stimulus für eine dedizierte Komponente abspielen kann (Replay-Funktion). Dadurch kann das Verhalten einer bestimmten Komponente auch im Zusammenspiel mit weiteren Komponenten, vorzugsweise mit allen Komponenten der Steuerung analysiert werden.

Die Erfindung kann vorteilhaft in Verbindung mit einer Vielzahl unterschiedlicher Steuerungen zur Steuerung industrieller Prozesse, Anlagen oder Maschinen eingesetzt werden. Darunter fallen insbesondere speicherprogrammierbare Steuerungen (SPS) zur Steuerung industrieller Prozesse oder Anlagen sowie numerische Steuerungen (CNC) zur Steuerung von Werkzeugmaschinen, Produktionsmaschinen, Robotern etc. Der Begriff "Steuerung" ist im Zusammenhang mit der Erfindung nicht streng im Sinne der Systemtheorie zu verstehen und umfasst selbstverständlich auch Regeleinrichtungen bzw. Regelungsvorgänge.

Die erfindungsgemäße Steuerung führt demnach zunächst zumindest über einen gewissen Zeitraum eine Steuerfunktion durch Abarbeitung eines Steuerprogrammes wie üblich in Echtzeit aus. Hierbei werden von der Steuerung Eingangsdaten bzw. Eingangssignale ("Istwerte") des Prozesses, der Anlage oder Maschine erfasst und die Steuerung erzeugt unter Einbeziehung dieser Istwerte Ausgangssignale in Form von Steuerbefehlen für den betreffenden Prozess bzw. die Anlage oder Maschine. Dabei können die Istwerte auch Prozess- bzw. Maschinenzustände sowie Sensorsignale umfassen. Neu bei der genannten Vorgehensweise ist jedoch, dass dabei die über die Kommunikationsverbindungen (Datenbusse) ausgeführten Datenübertragungen in Verbindung mit ihrem jeweiligen zeitlichen Bezug, z.B. in Form von "Zeitstempeln", aufgezeichnet werden. Die erfindungsgemäße Steuerung umfasst hierfür eine entsprechend ausgebildete Datenaufzeichnungs- und Wiedergabeeinrichtung, die insbesondere auch über die notwendigen Speichermittel verfügt. Welche Kommunikationsverbindungen aufgezeichnet werden und über welche Zeiträume die Aufzeichnungen erfolgen, kann vorteilhaft von einem Benutzer durch entsprechende Benutzereingaben in die Steuerung festgelegt werden.

Tritt nun bei der Steuerung ein Verhalten auf, welches genauer analysiert werden soll, insbesondere ein Fehler, so kann der Echtzeitbetrieb unterbrochen und der abgelaufene Steuervorgang analysiert werden. Vorteilhaft können nun zur Analyse die zuvor aus den Kommunikationsverbindungen (Datenbussen) abgegriffenen Daten mittels der Datenaufzeichnungs- und Wiedergabeeinrichtung durch Ausführen einer Replay-Funktion einer zu untersuchenden Komponente der industriellen Steuerung als Stimulus zugeführt werden. Vorzugsweise werden die aufgezeichneten Daten hierzu erneut auf den Datenbus ausgegeben, von dem sie ausgelesen und zwischengespeichert wurden.

Ein besonderer Vorteil der Erfindung ergibt sich dann, wenn die Datenaufzeichnungs- und Wiedergabeeinrichtung die Echtzeit durch eine virtuelle Zeit substituiert, wodurch es möglich wird, die Fehleranalyse durch das gesteuerte Unterbrechen des Stimulus z.B. mit einem Debugger zu unterstützen. Ferner ist es möglich, die Geschwindigkeit, mit der die Steuerfunktion während der Ausführung der Replay-Funktion erfolgt, zu variieren. Dadurch kann man sich schnell an einen Fehler herantasten (Zeitstraffung) und anschließend den Fehler durch eine Zeitdehnung sehr genau eingrenzen und analysieren.

Bei einer bevorzugten Ausführungsform der Erfindung werden die von einer Komponente zur Datenübertragung auf den Datenbus ausgegebenen Daten in dieser Komponente zwischengespeichert. Dies erleichtert das Handling der Daten, insbesondere bei einem großen Datenvolumen. Alternativ können die Daten auch in einem eigens dafür vorgesehenen, insbesondere zentralen, Zwischenspeicher gespeichert werden.

Bei einer weiteren Ausführungsform der Erfindung werden zusätzlich zu den steuerungsintern übertragenen Daten auch solche Daten, die über einen externen Datenbus zwischen der Steuerung und einer externen Einheit übertragen werden, erfasst und zwischengespeichert. Dabei kann es sich bei der externen Einheit um die zu steuernde Anlage oder Maschine handeln. Die externe Einheit kann aber auch ein Sensor, ein Aktor eine übergeordnete Steuereinrichtung usw. sein. Dies bietet den Vorteil, dass die erfindungsgemäße Fehlersuche nicht nur auf die internen Komponenten beschränkt bleibt, sondern auch die betreffenden externen Einheiten mit einbezogen werden können.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung:
- FIG 1: schematisch ein Steuerungssystem mit einer CNC-Steuerung sowie eine Werkzeugmaschine,
- FIG 2: die CNC-Steuerung im Replay-Modus

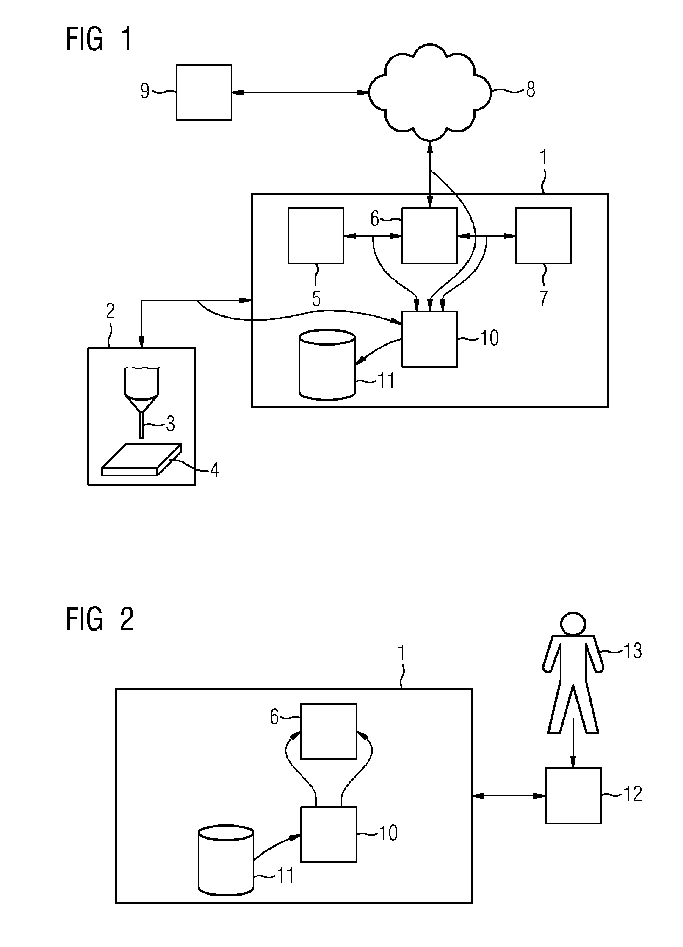

Figur 1 zeigt in schematischer, stark vereinfachter Darstellung eine industrielle Steuerungsumgebung mit einer CNC-Steuerung 1 zur Steuerung einer Werkzeugmaschine 2, die mittels eines Werkzeugs 3 ein Werkstück 4 bearbeitet. Die CNC-Steuerung 1 steuert insbesondere die Relativbewegung zwischen dem Werkzeug 3 und dem Werkstück 4 in Echtzeit. Die Steuerung ist im Ausführungsbeispiel in einen größeren Fertigungsverbund eingebunden und hierzu über ein Netzwerk 8 mit einem Leitrechner 9 verbunden.

Die erfindungsgemäße CNC-Steuerung 1 führt üblicher Weise eine Steuerfunktion durch Abarbeitung eines Steuerprogramms (Teileprogramms) in Echtzeit aus und steuert dadurch die Relativbewegung zwischen Werkzeug 3 und Werkstück 4. Hierbei werden von der Steuerung Eingangsdaten bzw. Eingangssignale ("Istwerte") der Werkzeugmaschine 2 erfasst und die CNC-Steuerung 1 erzeugt unter Einbeziehung dieser Istwerte Ausgangssignale in Form von Steuerbefehlen für die Werkzeugmaschine 2 und insbesondere deren Antriebe. Dabei können die Istwerte auch Maschinenzustände sowie Sensorsignale umfassen.

Die CNC-Steuerung 1 gemäß dem Ausführungsbeispiel weist unter anderem als wesentliche Komponenten einen Echtzeitkern 5 (NCK-Numerical Control Kernel), eine PLC 6 (Programmable Logic Control) sowie eine HMI-Einheit (Human-Machine-Interface) auf. Zwischen diesen Komponenten findet beim Betrieb der Steuerung 1 ein Datenaustausch über entsprechende Kommunikationsverbindungen statt (dargestellt als Doppelpfeile zwischen den Komponenten).

Erfindungsgemäß werden die über die Kommunikationsverbindungen (Datenbusse) ausgeführten Datenübertragungen in Verbindung mit ihrem jeweiligen zeitlichen Bezug, z.B. in Form von "Zeitstempeln", aufgezeichnet. Die erfindungsgemäße Steuerung umfasst hierfür eine entsprechend ausgebildete Datenaufzeichnungs- und Wiedergabeeinrichtung 10, die insbesondere auch über die notwendigen Speichermittel, im Ausführungsbeispiel den Speicher 11 verfügt. Welche Kommunikationsverbindungen aufgezeichnet werden und über welche Zeiträume die Aufzeichnungen erfolgen, kann vorteilhaft von einem Benutzer durch entsprechende Benutzereingaben in die Steuerung 1 festgelegt werden.

Tritt nun bei der Steuerung ein Verhalten auf, welches genauer analysiert werden soll, insbesondere ein Fehler, so kann der Echtzeitbetrieb der Steuerung 1 unterbrochen und der abgelaufene Steuervorgang analysiert werden. Vorteilhaft können nun zur Analyse die zuvor aus den Kommunikationsverbindungen (Datenbussen) abgegriffenen Daten mittels der Datenaufzeichnungs- und Wiedergabeeinrichtung 10 durch Ausführen einer Replay-Funktion erneut übertragen und somit als Stimulus verwendet werden. Dies ist in Figur 2 näher veranschaulicht, in der beispielhaft die Funktion der Komponente 6 (PLC) näher betrachtet werden soll. Wie ersichtlich ist, sind der Echtzeitbetrieb sowie die Verbindungen zu den Komponenten 5 (NCK) und 7 (HMI) unterbrochen und die Komponente 6 wird separat betrieben. Die Datenaufzeichnungs- und Wiedergabeeinrichtung 10 stellt an ihren Kommunikationseingängen die zuvor gespeicherten Daten als Stimulus zur Verfügung. Sie werden hierfür aus dem Speicher 11 ausgelesen. Die Datenaufzeichnungs- und Wiedergabeeinrichtung sorgt dabei nicht nur für das Aufzeichnen und spätere Wiedergeben der aufgezeichneten Daten, sondern sie umfasst auch die zur Analyse bzw. Fehlersuche notwendige Hard- und Software. Vorteilhaft steht die Datenaufzeichnungs- und Wiedergabeeinrichtung 10 zur Fehleranalyse in Verbindung mit einer externen Analyseeinrichtung 12, vorzugsweise einem PC mit entsprechenden Schnittstellen zur Steuerung 1 und einer geeigneten Fehleranalysesoftware, die wiederum von einem Benutzer 13 gesteuert wird.

Ein besonderer Vorteil der Erfindung ergibt sich dann, wenn die Datenaufzeichnungs- und Wiedergabeeinrichtung 10 die Echtzeit durch eine virtuelle Zeit substituiert, wodurch es möglich wird, die Fehleranalyse durch das gesteuerte Unterbrechen des Stimulus z.B. mit einem Debugger (nicht dargestellt) zu unterstützen. Ferner ist es möglich, dass die Datenaufzeichnungs- und Wiedergabeeinrichtung 10 in Verbindung mit der Analyseeinrichtung 12 in Folge entsprechender Benutzereingaben des Benutzers 13 die Geschwindigkeit, mit der die Steuerfunktion während der Ausführung der Replay-Funktion erfolgt, variiert. Dadurch kann man sich schnell an einen Fehler herantasten (Zeitstraffung) und anschließend den Fehler durch eine Zeitdehnung sehr genau eingrenzen und analysieren.

Bei einer weiteren Ausführungsform der Erfindung werden zusätzlich zu den steuerungsintern zwischen den Komponenten 5, 6 und 7 übertragenen Daten auch solche Daten, die über einen externen Datenbus zwischen der Steuerung 1 und einer externen Einheit übertragen werden, erfasst und zwischengespeichert. Dabei kann es sich bei der externen Einheit beispielsweise um die Werkzeugmaschine 1 handeln. Die externe Einheit kann aber auch ein Sensor, ein Aktor eine übergeordnete Steuereinrichtung 9 usw. sein. Dies bietet den Vorteil, dass die erfindungsgemäße Fehlersuche nicht nur auf die internen Komponenten 5 bis 7 beschränkt bleibt, sondern auch die betreffenden externen Einheiten (im Beispiel die Einheiten 2 und 9) mit einbezogen werden können.

Durch die Erfindung kann jede aufgezeichnete Komponentenkommunikation gezielt zur Untersuchung einer bestimmten Komponente verwendet werden. Auftretende Fehler werden damit reproduzierbar, da der Stimulus konstant ist. Außerdem kann die Analyse mehrfach hintereinander durchgeführt werden, da die aufgezeichneten Daten aus dem Echtzeitsystem persistent vorliegen.

## Patentansprüche

1. Verfahren zum Betrieb einer industriellen Steuerung (1), die zur Steuerung eines industriellen Prozesses, einer Anlage oder Maschine (2) in Echtzeit ausgebildet ist,
- wobei der Steuerung (1) ein Steuerprogramm zur Steuerung des industriellen Prozesses, der Anlage oder der Maschine (2) vorgegeben wird,
- wobei die Steuerung (1) unter Abarbeitung des Steuerprogramms Steuerbefehle für den Prozess, die Anlage oder Maschine (2) ermittelt,
- wobei die Steuerung (1) Istwerte des Prozesses, der Anlage oder der Maschine (2) empfängt und zur Steuerung berücksichtigt,
- wobei die Steuerung (1) mehrere Komponenten (5, 6, 7) umfasst, zwischen denen Daten über wenigstens einen Datenbus übertragen werden,
**dadurch gekennzeichnet,**
- **dass** die über den Datenbus übertragenen Daten erfasst und zwischengespeichert werden,
- **dass** die in Echtzeit erfolgte Steuerung des industriellen Prozesses, der Anlage oder der Maschine (2) angehalten wird
- und **dass** die zu einer bestimmten Komponente (6) übertragenen und zwischengespeicherten Daten zu einem späteren Zeitpunkt der bestimmten Komponente (6) erneut zugeführt werden.

2. Verfahren nach Anspruch 1, wobei die Daten in Verbindung mit einem zeitlichen Bezug erfasst und zwischengespeichert werden.

3. Verfahren nach Anspruch 1 oder 2, wobei die industrielle Steuerung (1) ab dem späteren Zeitpunkt auf Basis von einer von der tatsächlichen Zeit unabhängigen virtuellen Zeit betrieben wird.

4. Verfahren nach einem der vorherigen Ansprüche, wobei die von einer bestimmten Komponente (5, 6, 7) zur Datenübertragung auf den Datenbus ausgegebenen Daten in dieser Komponente zwischengespeichert werden.

5. Verfahren nach einem der vorherigen Ansprüche, wobei zusätzlich zu den steuerungsintern übertragenen Daten auch Daten, die über einen externen Datenbus zwischen der Steuerung (1) und einer externen Einheit übertragen werden, erfasst und zwischengespeichert werden.

6. Verfahren nach Anspruch 5, wobei die externe Einheit eine Anlage, eine Maschine (2), ein Sensor, ein Aktor oder eine übergeordnete Steuereinrichtung (9) ist.

7. Industrielle Steuerung (1), die zur Steuerung eines industriellen Prozesses, einer Anlage oder Maschine (2) in Echtzeit ausgebildet ist,
- wobei von der Steuerung (1) ein Steuerprogramm zur Steuerung des industriellen Prozesses, der Anlage oder der Maschine (2) ausführbar ist,
- wobei von der Steuerung (1) unter Abarbeitung des Steuerprogramms Steuerbefehle für den Prozess, die Anlage oder Maschine (2) ermittelbar sind,
- wobei von der Steuerung (1) Istwerte des Prozesses, der Anlage oder der Maschine (2) empfangbar und zur Steuerung berücksichtigbar sind,
- wobei die Steuerung (1) mehrere Komponenten (5, 6, 7) umfasst, zwischen denen Daten über wenigstens einen Datenbus übertragbar sind,
**dadurch gekennzeichnet,**
- **dass** die über den Datenbus übertragenen Daten mittels einer Datenaufzeichnungs- und Wiedergabeeinrichtung (10) erfassbar und in einem Zwischenspeicher (11) zwischenspeicherbar sind,
- **dass** die in Echtzeit erfolgte Steuerung des industriellen Prozesses, der Anlage oder der Maschine (2) unterbrechbar ist
- und **dass** die zu einer bestimmten Komponente (6) übertragenen und zwischengespeicherten Daten mittels der Datenaufzeichnungs- und Wiedergabeeinrichtung (10) zu einem späteren Zeitpunkt aus dem Zwischenspeicher (11) auslesbar und der bestimmten Komponente (6) erneut zuführbar sind.

8. Industrielle Steuerung (1) nach Anspruch 7, wobei die Daten in Verbindung mit einem zeitlichen Bezug erfassbar und zwischenspeicherbar sind.

9. Industrielle Steuerung (1) nach Anspruch 7 oder 8, wobei die industrielle Steuerung (1) ab dem späteren Zeitpunkt auf Basis von einer von der tatsächlichen Zeit unabhängigen virtuellen Zeit betreibbar ist.

10. Industrielle Steuerung (1) nach einem der Ansprüche 7 bis 9, wobei wenigstens eine bestimmte Komponente(5, 6, 7) Speichermittel umfasst zum zwischenspeichern von Daten, die von dieser Komponente zur Datenübertragung auf den Datenbus ausgegebenen werden.

11. Industrielle Steuerung (1) nach einem der Ansprüche 7 bis 10, wobei zusätzlich zu den steuerungsintern übertragenen Daten auch Daten, die über einen externen Datenbus zwischen der Steuerung (1) und einer externen Einheit übertragen werden, erfassbar und zwischenspeicherbar sind.

12. Industrielle Steuerung (1) nach einem der Ansprüche 7 bis 11, wobei die externe Einheit eine Anlage, eine Maschine (2), ein Sensor, ein Aktor oder eine übergeordnete Steuereinrichtung (9) ist.

13. Industrielle Steuerung (1) nach einem der Ansprüche 7 bis 12, ausgebildet als CNC-Steuerung (1) zur Steuerung der Bearbeitung eines Werkstücks (4) durch ein Werkzeug (3) mittels einer Werkzeugmaschine (2).

14. Fehleranalyseeinrichtung zur Fehleranalyse bei einer industriellen Steuerung (1) nach einem der Ansprüche 7 bis 13, umfassend eine Datenaufzeichnungs- und Wiedergabeeinrichtung (10), einen Zwischenspeicher (11) sowie eine externe Analyseeinrichtung (12).
